# EUROPÄISCHE PATENTSCHRIFT

(11) **EP 1 690 890 B1**
(45) Veröffentlichungstag und Bekanntmachung des Hinweises auf die Patenterteilung: **20.02.2008**
(21) Anmeldenummer: 05112992.2
(22) Anmeldetag: 27.12.2005
(51) Int. Cl.: C08J 5/10, C08K 5/098

(54) **Verfahren zur Herstellung von Formteilen unter Erhöhung der Schmelzesteifigkeit**
Process for the preparation of moulded parts under increased melt rigidity
Procédé de fabrication de pièces moulées avec une résistance à la fusion accrue

(30) Priorität: 15.02.2005 DE 102005007034
(43) Veröffentlichungstag der Anmeldung: 16.08.2006
(73) Patentinhaber: Evonik Degussa GmbH, 40474 Düsseldorf (DE)
(72) Erfinder: Dowe, Andreas, 46325, Borken (DE); Göring, Rainer, 46325, Borken (DE); Himmelmann, Martin, 45721, Haltern am See (DE); Bollmann, Sonja, 45721, Haltern am See (DE); Baumann, Franz-Erich, Dr., 48249, Dülmen (DE); Wursche, Roland, Dr., 48249, Dülmen (DE)

(56) Entgegenhaltungen:
- EP-A- 1 512 710
- WO-A-00/66650

## Beschreibung

Die vorliegende Erfindung betrifft ein Verfahren zur Herstellung von Formteilen unter Erhöhung der Schmelzesteifigkeit bei der Verarbeitung von Polyamiden, die herstellungsbedingt einen phosphorhaltigen Katalysator enthalten.

Polyamide sind Makromoleküle, die in der Hauptkette die Gruppierung -CO-NH- enthalten. Man erhält sie entweder aus zwei verschiedenen bifunktionellen Monomerbausteinen, von denen jeder zwei gleiche reaktive Gruppen, z. B. -NH₂ bzw. -COOH, enthält, oder aus einheitlichen bifunktionellen Bausteinen, die je eine Amino- und Carboxylgruppe tragen oder ausbilden können. Polyamide werden beispielsweise durch Polykondensationsreaktionen von Diaminen mit Dicarbonsäuren oder von Aminocarbonsäuren bzw. durch ringöffnende Polymerisation von Lactamen hergestellt.

In der Regel werden Polyamide für Anwendungen, die einer hohen Schmelzesteifigkeit bedürfen, nach einem zweistufigen Verfahren hergestellt. Dabei erfolgt zunächst die Herstellung eines vergleichsweise niederviskosen Präpolymers in einem Druckreaktor, wie beispielsweise im Kunststoff-Handbuch, Band 3/4 Technische Thermoplaste, Polyamide; Hrsg. Becker, Braun; Carl Hanser Verlag, 1998, beschrieben. Als Katalysator wird vorteilhafterweise eine protonensaure phosphorhaltige Verbindung wie z. B. H₃PO₂, H₃PO₃ oder H₃PO₄ eingesetzt. Diese Verbindungen können auch in Form ihrer Vorstufen wie z. B. Ester eingesetzt werden; letztere gehen unter den Reaktionsbedingungen durch Hydrolyse in die eben genannten freien Säuren über. Weitere Beispiele für als Katalysatoren geeignete Verbindungen sind Organophosphonsäuren oder Organophosphinsäuren oder deren Vorstufen. Neben einer verbesserten Lactamspaltung bei niedrigen Temperaturen, was in der Folge auch einen geringeren Restlactamgehalt bedeutet, wird durch die Präsenz dieses Katalysators eine Farbverbesserung der entsprechenden Polykondensate bewirkt; die Polykondensationsreaktion wird insgesamt beschleunigt. Die Wirkungen der katalysierenden Verbindungen erstrecken sich natürlich auch auf Polyamide, die kein Laurinlactam, sondern andere Monomere enthalten. Das Vorprodukt, das auf diese Weise in der ersten Reaktionsstufe erhalten wird, wird anschließend durch Reaktion der verbliebenen Endgruppen auf den erforderlichen Endwert des Molekulargewichts angehoben, beispielsweise durch Festphasennachkondensation. Dem erhaltenen hochmolekularen Polyamid werden normalerweise Additive zugegeben, wie beispielsweise Leitfähigkeitsadditive, Stabilisatoren, Weichmacher, Nukleierungsmittel, Verarbeitungshilfsmittel, Farbmittel etc.; die so erhaltene Formmasse findet dann dort Anwendung, wo eine erhöhte Schmelzesteifigkeit erforderlich ist, unter anderem in der Rohrextrusion beim Blasformen oder beim Thermoformen. Nachteilig ist allerdings, dass die Anhebung des Molekulargewichts auf das erforderliche Niveau eine lange Reaktionszeit bzw. Verweilzeit benötigt, so dass hier zusätzliche Verfahrenskosten resultieren.

In der WO 00/66650 wird die Verwendung von Verbindungen mit mindestens zwei Carbonateinheiten zur Aufkondensierung von Polyamiden beschrieben, wobei die Eigenschaften sicher und stabil eingestellt werden können und die Möglichkeit eröffnet wird, eine Mehrfachverarbeitung des aufkondensierten Materials vorzunehmen, ohne dass es zu Gelbildung oder Inhomogenitäten kommt. Ein auf diesem Prinzip beruhendes Additiv zur Molekulargewichtseinstellung bei Polyamiden wird von der Fa. Brüggemann KG unter der Bezeichnung Brüggolen M1251 vertrieben. Primäre Anwendungen liegen im Bereich der Viskositätseinstellung für Recyclat aus PA6 oder PA66, das in Extrusionsformmassen wiederverwertet wird. Bei dem Additiv Brüggolen M1251 handelt es sich um ein Masterbatch eines niedrigviskosen Polycarbonats, beispielsweise Lexan 141, in einem säureterminierten PA6. Für den Molekulargewichtsaufbau ist eine Reaktion der im aufzukondensierenden Material enthaltenen Aminoendgruppen mit dem Polycarbonat ursächlich.

Die Wirksamkeit der Methode wird in der WO 00/66650 am Beispiel der Aufkondensierung von PA6 und PA66 gezeigt, wobei die entsprechenden Polykondensate teilweise in reiner Form eingesetzt werden, teilweise aber auch Zuschlagstoffe wie z. B. Glasfasern und Montanat enthalten.

Es hat sich allerdings überraschend herausgestellt, dass die in der WO 00/66650 beschriebene Methode bei vielen Polyamiden, beispielsweise bei PA12, darauf basierenden Copolyamiden, PA11, PA612 oder alicyclischen Polyamiden nicht zu einer Molekulargewichtserhöhung führt. Eine hierfür notwendige Reaktion der Aminoendgruppen mit dem Additiv unterbleibt nachweislich. Es stellte sich daher die Aufgabe, auch für diese und ähnliche Polyamide, bei denen die Molekulargewichtserhöhung mit dem Verfahren gemäß WO 00/66650 nicht funktioniert, ein modifiziertes Verfahren zu finden, das eine sichere und einfache Molekulargewichtserhöhung der Materialien in einem Einschrittverfahren während der Compoundierung ermöglicht.

Überraschend wurde gefunden, dass die erwähnten Probleme dann auftreten, wenn bei der Herstellung des Polyamids eine protonensaure phosphorhaltige Verbindung als Katalysator eingesetzt wird, und dass in diesem Fall die Probleme beseitigt werden, wenn die zu einer schwachen Säure korrespondierende Base in Form eines Salzes zugesetzt wird, wobei vorteilhaft ein Salz einer schwachen Säure zugegeben wird. Ein ähnliches Verfahren ist in der nicht vorveröffentlichten EP-A-1512 710 beschrieben.

Gegenstand der Erfindung ist daher ein Verfahren zur Herstellung von Formteilen unter Aufkondensierung einer Polyamidformmasse, deren Polyamidanteil herstellungsbedingt mindestens 5 ppm und insbesondere 20 bis 500 ppm Phosphor in Form einer sauren Verbindung enthält, mit einer Verbindung mit mindestens zwei Carbonateinheiten, wobei
a) der Polyamidformmasse vor der Compoundierung oder bei der Compoundierung 0,001 bis 10 Gew.-%, bezogen auf das Polyamid, eines Salzes einer schwachen Säure zugegeben wird,
b) eine Mischung des fertigen Compounds und der Verbindung mit mindestens zwei Carbonateinheiten hergestellt wird,
c) die Mischung gegebenenfalls gelagert und/oder transportiert wird und
d) die Mischung anschließend zum Formteil verarbeitet wird, wobei erst in diesem Schritt die Aufkondensation erfolgt.

Überraschenderweise wurde festgestellt, dass bei dieser Zugabeweise während der Verarbeitung eine signifikante Erhöhung der Schmelzesteifigkeit eintritt, bei gleichzeitig moderaten Verarbeitungsdrücken und geringer Motorlast. Somit können trotz hoher Schmelzeviskosität hohe Durchsätze bei der Verarbeitung erzielt werden, woraus eine Verbesserung der Wirtschaftlichkeit des Herstellverfahrens resultiert.

Ein im Sinne der Erfindung geeignetes Polyamid ist auf Basis von Lactamen, Aminocarbonsäuren, Diaminen bzw. Dicarbonsäuren aufgebaut. Es kann darüber hinaus verzweigend wirkende Bausteine enthalten, die beispielsweise von Tricarbonsäuren, Triaminen oder Polyethylenimin abgeleitet sind. Geeignete Typen sind, jeweils als Homopolymer oder als Copolymer, beispielsweise PA6, PA46, PA66, PA610, PA66/6, PA6/6T, PA66/6T sowie insbesondere PA612, PA1010, PA1012, PA1212, PA613, PA1014,PA11, PA12 oder ein transparentes Polyamid. Bei transparenten Polyamiden kommen beispielsweise in Frage:
- das Polyamid aus Terephthalsäure und dem Isomerengemisch aus 2.2.4- und 2.4.4-Trimethylhexamethylendiamin,
- das Polyamid aus Isophthalsäure und 1.6-Hexamethylendiamin,
- das Copolyamid aus einem Gemisch aus Terephthalsäure/Isophthalsäure und 1.6-Hexamethylendiamin,
- das Copolyamid aus Isophthalsäure, 3.3'-Dimethyl-4.4'-diaminodicyclohexylmethan und Laurinlactam oder Caprolactam,
- das (Co)Polyamid aus 1.12-Dodecandisäure, 3.3'-Dimethyl-4.4'-diaminodicyclohexylmethan und gegebenenfalls Laurinlactam oder Caprolactam,
- das Copolyamid aus Isophthalsäure, 4.4'-Diaminodicyclohexylmethan und Laurinlactam oder Caprolactam,
- das Polyamid aus 1.12-Dodecandisäure und 4.4'-Diaminodicyclohexylmethan,
- das Copolyamid aus einem Terephthalsäure/Isophthalsäure-Gemisch, 3.3'-Dimethyl-4.4'-diaminodicyclohexylmethan und Laurinlactam.

Weiterhin sind Polyetheramide auf der Basis von Lactamen, Aminocarbonsäuren, Diaminen, Dicarbonsäuren und Polyetherdiaminen und/oder Polyetherdiolen geeignet.

Bevorzugt haben die Ausgangsverbindungen Molekulargewichte Mₙ von größer als 5000, insbesondere von größer als 8000. Hierbei werden Polyamide eingesetzt, deren Endgruppen zumindest teilweise als Aminogruppen vorliegen. Beispielsweise liegen mindestens 30 %, mindestens 40 %, mindestens 50 %, mindestens 60 %, mindestens 70 %, mindestens 80 % oder mindestens 90 % der Endgruppen als Aminoendgruppen vor. Die Herstellung von Polyamiden mit höherem Aminoendgruppengehalt unter Verwendung von Diaminen oder Polyaminen als Regler ist Stand der Technik. Im vorliegenden Fall wird bei der Herstellung des Polyamids bevorzugt ein aliphatisches, cycloaliphatisches oder araliphatisches Diamin mit 4 bis 44 C-Atomen als Regler eingesetzt. Geeignete Diamine sind beispielsweise Hexamethylendiamin, Decamethylendiamin, 2.2.4- bzw. 2.4.4-Trimethylhexamethylendiamin, Dodecamethylendiamin, 1.4-Diaminocyclohexan, 1.4- oder 1.3-Dimethylaminocyclohexan, 4.4'-Diaminodicyclohexylmethan, 4.4'-Diamino-3.3'dimethyldicyclohexylmethan, 4.4'-Diaminodicyclohexylpropan, Isophorondiamin, Metaxylylidendiamin oder Paraxylylidendiamin.

In einer weiteren bevorzugten Ausführungsform wird bei der Herstellung des Polyamids ein Polyamin als Regler und gleichzeitig Verzweiger eingesetzt. Beispiele hierfür sind Diethylentriamin, 1.5-Diamino-3-(β-aminoethyl)pentan, Tris(2-aminoethyl)amin, N,N-Bis(2-aminoethyl)-N',N'bis[2-[bis(2-aminoethyl)amino]-ethyl]-1,2-ethandiamin, Dendrimere sowie Polyethylenimine, insbesondere verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
25 bis 46 % primäre Aminogruppen,
30 bis 45 % sekundäre Aminogruppen und
16 bis 40 % tertiäre Aminogruppen.

Im erfindungsgemäßen Verfahren wird mindestens eine Verbindung mit mindestens zwei Carbonateinheiten in einem Mengenverhältnis von 0,005 bis 10 Gew.-% eingesetzt, berechnet im Verhältnis zum eingesetzten Polyamid. Vorzugsweise liegt dieses Verhältnis im Bereich von 0,01 bis 5,0 Gew.-%, besonders bevorzugt im Bereich von 0,05 bis 3 Gew.-%. Der Begriff "Carbonat" bedeutet hier Ester der Kohlensäure insbesondere mit Phenolen oder Alkoholen.

Die Verbindung mit mindestens zwei Carbonateinheiten kann niedermolekular, oligomer oder polymer sein. Sie kann vollständig aus Carbonateinheiten bestehen oder sie kann noch weitere Einheiten aufweisen. Diese sind vorzugsweise Oligo- oder Polyamid-, -ester-, -ether-, -etheresteramid- oder etheramideinheiten. Solche Verbindungen können durch bekannte Oligo- oder Polymerisationsverfahren bzw. durch polymeranaloge Umsetzungen hergestellt werden.

In einer bevorzugten Ausführungsform handelt es sich bei der Verbindung mit mindestens zwei Carbonateinheiten um ein Polycarbonat, beispielsweise auf Basis von Bisphenol A, bzw. um ein Blockcopolymeres, das einen derartigen Polycarbonatblock enthält.

Die Eindosierung der als Additiv verwendeten Verbindung mit mindestens zwei Carbonateinheiten in Form eines Masterbatches ermöglicht eine genauere Dosierung des Additivs, da größere Mengen verwendet werden. Es stellte sich zudem heraus, dass durch die Verwendung eines Masterbatches eine verbesserte Extrudatqualität erzielt wird. Das Masterbatch umfasst als Matrixmaterial bevorzugt das Polyamid, das auch im erfindungsgemäßen Verfahren aufkondensiert wird, oder ein damit verträgliches Polyamid, jedoch können auch unverträgliche Polyamide unter den Reaktionsbedingungen eine partielle Anbindung an das aufzukondensierende Polyamid erfahren, was eine Kompatibilisierung bewirkt. Das als Matrixmaterial im Masterbatch verwendete Polyamid hat bevorzugt ein Molekulargewicht Mₙ von größer als 5000 und insbesondere von größer als 8000. Hierbei sind diejenigen Polyamide bevorzugt, deren Endgruppen überwiegend als Carbonsäuregruppen vorliegen. Beispielsweise liegen mindestens 80 %, mindestens 90 % oder mindestens 95 % der Endgruppen als Säuregruppen vor.

Die Konzentration der Verbindung mit mindestens zwei Carbonateinheiten im Masterbatch beträgt vorzugsweise 0,15 bis 50 Gew.-%, besonders bevorzugt 0,2 bis 25 Gew.-% und insbesondere bevorzugt 0,3 bis 15 Gew.-%. Die Herstellung eines solchen Masterbatches erfolgt in der üblichen, dem Fachmann bekannten Weise.

Geeignete Verbindungen mit mindestens zwei Carbonateinheiten sowie geeignete Masterbatches sind in der WO 00/66650, auf die hier ausdrücklich Bezug genommen wird, ausführlich beschrieben.

Bei der vorliegenden Erfindung enthält das Polyamid zwingend eine protonensaure phosphorhaltige Verbindung in Form eines aktiven Polykondensationskatalysators, der entweder in dieser stofflichen Form oder in Form von Vorstufen zugesetzt werden kann, die unter den Reaktionsbedingungen den aktiven Katalysator bilden, oder dessen Folgeprodukten. Die Bestimmung des Phosphorgehaltes erfolgt nach DIN EN ISO 11885 mittels ICP-OES (Inductively Coupled Plasma-Optical Emission Spectrometry), sie ist aber auch beispielsweise durch AAS (Atomabsorptionsspektroskopie) möglich. Zu beachten ist, dass in Formmassen zusätzlich auch andere phosphorhaltige Komponenten enthalten sein können, beispielsweise als Stabilisatoren. In diesem Fall erfolgt die Bestimmung des aus der Polykondensation stammenden Phosphors nach einer Differenzmethode. Die Probenvorbereitung wird dann auf die jeweilige Problemstellung abgestimmt.

Das Salz einer schwachen Säure zeigt vermutlich deshalb die erfindungsgemäße Wirk-samkeit, weil es die enthaltenen Phosphorverbindungen unschädlich macht. Dabei liegt der pKₐ-Wert der schwachen Säure bei 2,5 oder höher, bevorzugt bei 3,0 oder höher und besonders bevorzugt bei 3,5 oder höher. Geeignete schwache Säuren sind beispielsweise ausgewählt aus Carbonsäuren wie Monocarbonsäuren, Dicarbonsäuren, Tricarbonsäuren, Hydroxycarbonsäuren, Aminocarbonsäuren, Phenolen, Alkoholen und CH-aciden Verbindungen.

Daneben sind auch Salze anorganischer schwacher Säuren geeignet, beispielsweise Carbonate, Hydrogencarbonate, Phosphate, Hydrogenphosphate, Hydroxide, Sulfite, während geeignete Metalle beispielsweise Alkalimetalle, Erdalkalimetalle, Metalle der III. Hauptgruppe oder Metalle der II. Nebengruppe sein können. Als Kation sind prinzipiell auch organische Kationen geeignet, beispielsweise Ammoniumionen, die vollständig oder teilweise mit organischen Resten substituiert sind.

Darüber hinaus sind auch Salze schwacher Säuren einsetzbar, die Teil makromolekularer Strukturen sind, beispielsweise in Form von Ionomeren vom Typ Surlyn^{®} (DuPont) oder voll- bzw. teilverseiften Polyethylenwachsoxidaten.

Beispielhaft seien folgende Salze aufgeführt: Aluminiumstearat, Bariumstearat, Lithiumstearat, Magnesiumstearat, Kaliumoleat, Natriumoleat, Calciumlaurat, Calciummontanat, Natriummontanat, Kaliumacetat, Zinkstearat, Magnesiumstearat, Calciumhydroxid, Magnesiumhydroxid, Natriumphenolat-Trihydrat, Natriummethanolat, Calciumcarbonat, Natriumcarbonat, Natriumhydrogencarbonat, Trinatriumphosphat und Dinatriumhydrogenphosphat.

Vom Salz einer schwachen Säure werden bevorzugt 0,001 bis 5 Gew.-%, besonders bevorzugt 0,01 bis 2,5 Gew.-% und insbesondere bevorzugt 0,05 bis 1 Gew.-% eingesetzt, jeweils bezogen auf das Polyamid.

Im erfindungsgemäßen Verfahren können weiterhin die üblichen Zuschlagstoffe verwendet werden, die bei der Herstellung von Polyamidformmassen Verwendung finden. Illustrative Beispiele hierfür sind Färbemittel, Flammverzögerer und -schutzmittel, Stabilisatoren, Füllstoffe, Gleitfähigkeitsverbesserer, Formentrennmittel, Schlagzähmodifikatoren, Weichmacher, Kristallisationsbeschleuniger, Antistatika, Schmiermittel, Verarbeitungshilfsmittel sowie weitere Polymere, die mit Polyamiden üblicherweise compoundiert werden.

Beispiele dieser Zuschlagstoffe sind wie folgt:

Färbemittel: Titandioxid, Bleiweiß, Zinkweiß, Liptone, Antimonweiß, Ruß, Eisenoxidschwarz, Manganschwarz, Kobaltschwarz, Antimonschwarz, Bleichromat, Mennige, Zinkgelb, Zinkgrün, Cadmiumrot, Kobaltblau, Berliner Blau, Ultramarin, Manganviolett, Cadmiumgelb, Schweinfurter Grün, Molybdänorange und -rot, Chromorange und -rot, Eisenoxidrot, Chromoxidgrün, Strontiumgelb, Molybdänblau, Kreide, Ocker, Umbra, Grünerde, Terra di Siena gebrannt, Graphit oder lösliche organische Farbstoffe.

Flammverzögerer und Flammschutzmittel: Antimontrioxid, Hexabromcyclododecan, Tetrachlor- oder Tetrabrombisphenol und halogenierte Phosphate, Borate, Chlorparaffine sowie roter Phosphor, ferner Stannate, Melamincyanurat und dessen Kondensationsprodukte wie Melam, Melem, Melon, Melaminverbindungen wie Melaminpyro- und polyphosphat, Ammoniumpolyphosphat, Aluminiumhydroxid, Calciumhydroxid sowie phosphororganische Verbindungen, die keine Halogene enthalten wie beispielsweise Resorcinoldiphenylphosphat oder Phosphonsäureester.

Stabilisatoren: Metallsalze, insbesondere Kupfersalze und Molybdänsalze sowie Kupferkomplexe, Phosphite, sterisch gehinderte Phenole, sekundäre Amine, UV-Absorber und HALS-Stabilisatoren.

Füllstoffe: Glasfasern, Glaskugeln, Mahlglasfaser, Kieselgur, Talkum, Kaolin, Tone, CaF₂, Aluminiumoxide sowie Kohlefasern.

Gleitfähigkeitsverbesserer und Schmiermittel: MoS₂, Paraffine, Fettalkohole sowie Fettsäureamide.

Formentrennmittel und Verarbeitungshilfsstoffe: Wachse (Montanate), Montansäurewachse, Montanesterwachse, Polysiloxane, Polyvinylalkohol, SiO₂, Calciumsilikate sowie Perfluorpolyether.

Weichmacher: BBSA, POBO.

Schlagzähmodifikatoren: Polybutadien, EPM, EPDM, HDPE, Acrylatkautschuk.

Antistatika: Ruß, Carbonfasern, Graphitfibrillen, mehrwertige Alkohole, Fettsäureester, Amine, Säureamide, quarternäre Ammoniumsalze.

Weitere Polymere: ABS, Polypropylen.

Diese Zuschlagstoffe können in den üblichen, dem Fachmann bekannten Mengen verwendet werden.

Das Salz der schwachen Säure kann zu jedem beliebigen Zeitpunkt zugegeben werden. Es kann beispielsweise bereits nach Beendigung der Polykondensation in die Primärschmelze dosiert werden, etwa direkt in den Polykondensationsreaktor oder in den Ausfahrextruder. Es kann andererseits auch auf das Polyamidgranulat vor der Compoundierung aufgebracht werden, z. B. in einem Heißmischer oder einem Taumeltrockner. Eine andere Möglichkeit besteht darin, das Salz bei der Compoundierung zusammen mit den Zuschlagstoffen zuzugeben. In allen Fällen kann das Salz als solches oder als Masterbatch zugesetzt werden.

Die Verbindung mit mindestens zwei Carbonateinheiten wird als solche oder als Masterbatch erfindungsgemäß erst nach der Compoundierung, aber spätestens während der Verarbeitung zugegeben. Bevorzugt mischt man bei der Verarbeitung das aufzukondensierende Polyamid bzw. die aufzukondensierende Polyamidformmasse als Granulat mit dem Granulat der Verbindung mit mindestens zwei Carbonateinheiten oder dem entsprechenden Masterbatch. Es kann aber auch eine Granulatmischung der fertig compoundierten Polyamidformmasse mit der Verbindung mit mindestens zwei Carbonateinheiten bzw. dem Masterbatch hergestellt, anschließend transportiert oder gelagert und danach verarbeitet werden. Entsprechend kann natürlich auch mit Pulvermischungen verfahren werden. Entscheidend ist, dass die Mischung erst bei der Verarbeitung aufgeschmolzen wird. Eine gründliche Vermischung der Schmelze bei der Verarbeitung ist empfehlenswert. Das Masterbatch kann genauso gut jedoch auch als Schmelzestrom mit Hilfe eines beigestellten Extruders in die Schmelze der zu verarbeitenden Polyamidformmasse zudosiert und dann gründlich eingemischt werden.

Gegenstand der Erfindung sind auch die erfindungsgemäß hergestellten Formteile, soweit sie Hohlkörper oder Hohlprofile sind, insbesondere mit großen Durchmessern, beispielsweise Gasleitungsrohre, Offshore-Leitungen, Versorgungsleitungen, Kabelkanäle, Tankstellenversorgungsleitungen, Belüftungsleitungen oder Luftansaugrohre. Ihr Außendurchmesser beträgt mindestens 30 mm, bevorzugt mindestens 60 mm und insbesondere bevorzugt mindestens 110 mm, während ihre Wandstärke mindestens 1 mm, bevorzugt mindestens 3 mm, insbesondere bevorzugt mindestens 6 mm und ganz besonders bevorzugt mindestens 10 mm beträgt. Derartige Formteile sind herstellbar beispielsweise durch Extrusion, Coextrusion oder Blasformen einschließlich Saugblasformen, 3-D-Blasformen, Schlaucheinlege- und Schlauchmanipulationsverfahren. Diese Verfahren sind Stand der Technik.

Die Wandung dieser Hohlkörper oder Hohlprofile kann hierbei entweder einschichtig sein und in diesem Fall vollständig aus der anspruchsgemäß verwendeten Formmasse bestehen, sie kann aber auch mehrschichtig sein, wobei die erfindungsgemäß verwendete Formmasse die Außenschicht, die Innenschicht und/oder die Mittelschicht bilden kann. Die andere Schicht bzw. die anderen Schichten bestehen aus Formmassen auf Basis anderer Polymerer, beispielsweise von Polyethylen, Polypropylen, Fluorpolymeren, oder aus Metall, beispielsweise Stahl. Beispielsweise sind Offshore-Leitungen meist mehrschichtig aufgebaut; sie bestehen in der Regel aus einer Stahlstruktur, die sowohl zur Innenseite als auch zur Außenseite des Rohres durch Polymerschichten gegenüber Medien geschützt ist.

Im Folgenden soll die Erfindung beispielhaft erläutert werden. In den Versuchen wurden folgende Materialien eingesetzt:
- Amingeregeltes PA12: mit 50 mäq/kg NH₂-Gruppen und 9 mäq/kg COOH-Gruppen, ηᵣₑₗ ca. 2,15. Enthält herstellungsbedingt 54,5 ppm Phosphor.
- Säuregeregeltes PA12: mit 8 mäq/kg NH₂-Gruppen und 50 mäq/kg COOH-Gruppen, ηᵣₑₗ ca. 2,15. Enthält herstellungsbedingt 54,5 ppm Phosphor.
- Brüggolen^{®} M1251,: eine Mischung aus einem niederviskosen Polycarbonat und einem säureterminierten PA6.
- Ceasit^{®} PC: (Calciumstearat).

Auf einem Zweischneckenextruder vom Typ Werner & Pfleiderer ZSK 30 wurden die in der Tabelle 1 angegebenen Compounds hergestellt.

### Vergleichsbeispiele A bis C sowie Beispiel 1:

Auf einem 50er Reifenhäuser Einschneckenextruder mit Dreizonenschnecke und L = 25 D wurden die in der Tabelle 2 angegebenen Einsatzstoffe ausgehend vom Granulat bzw. einer Granulatmischung verarbeitet und als Rohre mit einer Wandstärke von 2,9 mm und einem Außendurchmesser von 32 mm extrudiert. Bei der Gegenüberstellung des Vergleichsbeispiels C und des Beispiels 1 erkennt man, dass erfindungsgemäß eine deutlich niedrigere Motorlast nötig war, um ein Formteil aus einem sehr hochmolekularen Polyamid herzustellen.

Beim direkten Einsatz des Compound C verringert sich ηᵣₑₗ (als Maßstab für das Molekulargewicht) von anfangs 2,55 auf 2,30 (Vergleichsbeispiel C) durch Kettenabbau unter Scherung. Beim erfindungsgemäßen Verfahren (Beispiel 1) ist kein derartiger Kettenabbau festzustellen.

**Tabelle 1: Herstellung der Compounds**

| | **Compound A** | **Compound B** | **Compound C** | **Batch 1** | **Batch 2** |
|---|---|---|---|---|---|
| Amingeregeltes PA12[Gew.-%] | 60 | 59,9 | 99,3 | 99,9 | 0 |
| Säuregeregeltes PA12 [Gew.-%] | 40 | 40 | 0 | 0 | 98,4 |
| Brüggolen M1251 [Gew.-%] | 0 | 0,6 | 0,6 | 0 | 1,5 |
| Ceasit PC [Gew.-%] | 0 | 0 | 0,1 | 0,1 | 0,1 |
| Durchsatz [kg/h] | 10 | 10 | 10 | 10 | 10 |
| Schergeschwindigkeit [1/min] | 250 | 250 | 250 | 250 | 250 |
| Schmelzetemperatur [°C] | 251 | 250 | 259 | 249 | 251 |
| Schmelzedruck [bar] | 33 | 32 | 62 | 35 | 34 |
| Motorleistung [%] | 73 | 75 | 96 | 78 | 72 |
| ηᵣₑₗ gemäß DIN EN ISO 307 | 2,11 | 2,10 | 2,55 | 2,10 | 2,12 |

**Tabelle 2: Verarbeitung zu Rohren**

| | **Compound A** | **Compound B** | **Compound C** | **Beispiel 1** |
|---|---|---|---|---|
| Compound A [Gew.-%] | 100 | 0 | 0 | 0 |
| Compound B [Gew.-%] | 0 | 100 | 0 | 0 |
| Compound C [Gew.-%] | 0 | 0 | 100 | 0 |
| Batch 1 [Gew.-%] | 0 | 0 | 0 | 60 |
| Batch 2 [Gew.-%] | 0 | 0 | 0 | 40 |
| Schergeschwindigkeit [1/min] | 37 | 37 | 37 | 37 |
| Abzugsgeschwindigkeit [m/min] | 2,3 | 2,3 | 2,3 | 2,3 |
| Schmelzetemperatur [°C] | 242 | 243 | 255 | 247 |
| Schmelzedruck [bar] | 58 | 57 | 97 | 119 |
| Motorleistung [%] | 66 | 66 | 94 | 70 |
| ηᵣₑₗ gemäß DIN EN ISO 307 | 2,08 | 2,07 | 2,30 | 2,51 |

## Patentansprüche

1. Verfahren zur Herstellung von Formteilen unter Aufkondensierung einer Polyamidformmasse, deren Polyamidanteil herstellungsbedingt mindestens 5 ppm Phosphor in Form einer sauren Verbindung enthält, mit einer Verbindung mit mindestens zwei Carbonateinheiten, wobei
a) dem Polyamid vor der Compoundierung oder bei der Compoundierung 0,001 bis 10 Gew.-%, bezogen auf das Polyamid, eines Salzes einer schwachen Säure zugegeben wird,
b) eine Mischung des fertigen Compounds und 0,005 bis 10 Gew-%, bezogen auf das Polyamid, der Verbindung mit mindestens zwei Carbonateinheiten hergestellt wird,
c) die Mischung gegebenenfalls gelagert und/oder transportiert wird und
d) die Mischung anschließend zum Formteil verarbeitet wird, wobei erst in diesem Schritt die Aufkondensation erfolgt.

2. Verfahren gemäß Anspruch 1,
**dadurch gekennzeichnet,**
**dass** der Polyamidanteil 20 bis 500 ppm Phosphor in Form einer sauren Verbindung enthält.

3. Verfahren gemäß einem der vorhergehenden Ansprüche,
**dadurch gekennzeichnet,**
**dass** dem Polyamid 0,001 bis 5 Gew.-% eines Salzes einer schwachen Säure zugegeben wird.

4. Verfahren gemäß einem der vorhergehenden Ansprüche,
**dadurch gekennzeichnet,**
**dass** dem Polyamid 0,01 bis 2,5 Gew.-% eines Salzes einer schwachen Säure zugegeben wird.

5. Verfahren gemäß einem der vorhergehenden Ansprüche,
**dadurch gekennzeichnet,**
**dass** dem Polyamid 0,05 bis 1 Gew.-% eines Salzes einer schwachen Säure zugegeben wird.

6. Verfahren gemäß einem der vorhergehenden Ansprüche,
**dadurch gekennzeichnet,**
**dass** die schwache Säure einen pKₐ-Wert von 2,5 oder höher besitzt.

7. Verfahren gemäß einem der vorhergehenden Ansprüche,
**dadurch gekennzeichnet,**
**dass** das Salz einer schwachen Säure ein Alkalimetallsalz, ein Erdalkalimetallsalz, das Salz eines Metalls der III. Hauptgruppe, das Salz eines Metalls der II. Nebengruppe oder ein Ammoniumsalz ist.

8. Verfahren gemäß einem der vorhergehenden Ansprüche,
**dadurch gekennzeichnet,**
**dass** das Polyamid unter Verwendung eines Diamins oder Polyamins als Regler hergestellt wurde.

9. Verfahren gemäß einem der vorhergehenden Ansprüche,
**dadurch gekennzeichnet,**
**dass** die Verbindung mit mindestens zwei Carbonateinheiten als Masterbatch eingesetzt wird.

10. Formteil, hergestellt gemäß einem der vorhergehenden Ansprüche,
**dadurch gekennzeichnet,**
**dass** es ein Hohlkörper oder Hohlprofil ist, dessen Außendurchmesser mindestens 30 mm und dessen Wandstärke mindestens 1 mm beträgt.

11. Formteil gemäß Anspruch 10,
**dadurch gekennzeichnet,**
**dass** es ein Gasleitungsrohr, eine Offshore-Leitung, eine Versorgungsleitung, ein Kabelkanal, eine Tankstellenversorgungsleitung, eine Belüftungsleitung oder ein Luftansaugrohr ist.

12. Formteil gemäß einem der Ansprüche 10 und 11,
**dadurch gekennzeichnet,**
**dass** die Wandung mehrschichtig aufgebaut ist.

## Claims

1. Process for producing moldings with condensing-up of a polyamide molding composition whose polyamide component contains, as a result of the method of preparation, at least 5 ppm of phosphorus in the form of an acidic compound by means of a compound having at least two carbonate units, wherein
a) from 0.001 to 10% by weight, based on the polyamide, of a salt of a weak acid is added to the polyamide prior to compounding or during compounding,
b) a mixture of the finished composition and from 0.005 to 10% by weight, based on the polyamide, of the compound having at least two carbonate units is prepared,
c) the mixture is, if appropriate, stored and/or transported and
d) the mixture is subsequently processed to produce the molding, with the condensing-up occurring only in this step.

2. Process according to Claim 1,
**characterized in that**
the polyamide component contains from 20 to 500 ppm of phosphorus in the form of an acidic compound.

3. Process according to either of the preceding claims,
**characterized in that**
from 0.001 to 5% by weight of a salt of a weak acid is added to the polyamide.

4. Process according to any of the preceding claims,
**characterized in that**
from 0.01 to 2.5% of a salt of a weak acid is added to the polyamide.

5. Process according to any of the preceding claims,
**characterized in that**
from 0.05 to 1% by weight of a salt of a weak acid is added to the polyamide.

6. Process according to any of the preceding claims,
**characterized in that**
the weak acid has a pKₐ of 2.5 or above.

7. Process according to any of the preceding claims,
**characterized in that**
the salt of a weak acid is an alkali metal salt, an alkaline earth metal salt, the salt of a metal of main group III, the salt of a metal of transition group II or an ammonium salt.

8. Process according to any of the preceding claims,
**characterized in that**
the polyamide has been prepared using a diamine or polyamine as regulator.

9. Process according to any of the preceding claims,
**characterized in that**
the compound having at least two carbonate units is used as a masterbatch.

10. Molding produced according to any of the preceding claims
**characterized in that** it is a hollow body or hollow profile whose external diameter is at least 30 mm and whose wall thickness is at least 1 mm.

11. Molding according to Claim 10,
**characterized in that** it is a gas pipe, an offshore pipeline, a supply line, a cable conduit, a filling station supply line, a ventilation line or an air intake pipe.

12. Molding according to either of Claims 10 and 11,
**characterized in that** the wall has a multilayer structure.

## Revendications

1. Procédé de fabrication de pièces moulées en recondensant une masse moulée de polyamide, dont la part polyamide contient dans les conditions de fabrication au moins 5 ppm de phosphore sous la forme d'un composé acide, avec un composé comportant au moins deux unités carbonate :
a) 0,001 à 10 % en poids, par rapport au polyamide, d'un sel d'un acide faible étant ajoutés au polyamide avant la fabrication du composé ou lors de la fabrication du composé,
b) un mélange du composé terminé et 0,005 à 10 % en poids, par rapport au polyamide, du composé comportant au moins deux unités carbonate étant préparé,
c) le mélange étant éventuellement stocké et/ou transporté et
d) le mélange étant transformé ensuite pour donner une pièce moulée, la recondensation n'intervenant que dans cette étape.

2. Procédé selon la revendication 1,
**caractérisé en ce que**
la part polyamide contient 20 à 500 ppm de phosphore sous la forme d'un composé acide.

3. Procédé selon l'une quelconque des revendications précédentes,
**caractérisé en ce que**
0,001 à 5 % en poids d'un sel d'un acide faible sont ajoutés au polyamide.

4. Procédé selon l'une quelconque des revendications précédentes,
**caractérisé en ce que**
0,01 à 2,5 % en poids d'un sel d'un acide faible sont ajoutés au polyamide.

5. Procédé selon l'une quelconque des revendications précédentes,
**caractérisé en ce que**
0,05 à 1 % en poids d'un sel d'un acide faible est ajouté au polyamide.

6. Procédé selon l'une quelconque des revendications précédentes,
**caractérisé en ce que**
l'acide faible possède une valeur pKₐ de 2,5 ou plus.

7. Procédé selon l'une quelconque des revendications précédentes,
**caractérisé en ce que**
le sel d'un acide faible est un sel de métal alcalin, un sel de métal alcalino-terreux, le sel d'un métal du troisième groupe principal, le sel d'un métal du deuxième sous-groupe ou un sel d'ammonium.

8. Procédé selon l'une quelconque des revendications précédentes,
**caractérisé en ce que**
le polyamide est préparé en utilisant une diamine ou une polyamine en tant que régulateur.

9. Procédé selon l'une quelconque des revendications précédentes,
**caractérisé en ce que**
le composé est utilisé avec au moins deux unités carbonate en tant que mélange-maître.

10. Pièce moulée, fabriquée selon l'une quelconque des revendications précédentes,
**caractérisée en ce que**
elle est un corps creux ou un profilé creux, dont le diamètre extérieur est d'au moins 30 mm et dont l'épaisseur de paroi est d'au moins 1 mm.

11. Pièce moulée selon la revendication 10,
**caractérisée en ce que**
elle est un tuyau de gaz, une conduite offshore, une conduite d'alimentation, un caniveau de câble, une conduite d'alimentation de station-service, une conduite d'aération ou une tubulure d'aspiration d'air.

12. Pièce moulée selon l'une quelconque des revendications 10 et 11,
**caractérisée en ce que**
la paroi est constituée de plusieurs couches.
